## Europäisches Patentamt

## European Patent Office

## Office européen des brevets

(11) Numéro de publication: **0 165 113**
**B1**

(12) # FASCICULE DE BREVET EUROPÉEN

(45) Date de publication du fascicule du brevet:
20.07.88

(51) Int. Cl.⁴: **B 60 J 7/06**

(21) Numéro de dépôt: **85400883.6**

(22) Date de dépôt: **07.05.85**

(54) **Dispositif de bâchage et de débâchage.**

(30) Priorité: **17.05.84 FR 8407629**
**27.02.85 FR 8502799**

(43) Date de publication de la demande:
**18.12.85 Bulletin 85/51**

(45) Mention de la délivrance du brevet:
**20.07.88 Bulletin 88/29**

(84) Etats contractants désignés:
**BE CH DE GB IT LI NL SE**

(56) Documents cité:
**FR-A-1 372 826**
**FR-A-1 440 362**
**FR-A-2 288 015**
**FR-A-2 415 552**
**GB-A-1 217 988**
**US-A-2 443 478**
**US-A-2 807 499**
**US-A-3 041 104**
**US-A-3 433 470**
**US-A-3 768 540**
**US-A-3 806 185**
**US-A-3 964 781**

(73) Titulaire: **Jaboulay, Joannès, 13 Quai Riondet,**
**F-38200 Vienne (FR)**
Titulaire: **Jaboulay née Berset, Louise, 13 Quai**
**Riondet, F-38200 Vienne (FR)**

(72) Inventeur: **Jaboulay, Joannès, 13 Quai Riondet,**
**F-38200 Vienne (FR)**
Inventeur: **Jaboulay née Berset, Louise, 13 Quai**
**Riondet, F-38200 Vienne (FR)**

(74) Mandataire: **Cuer, André, CABINET CUER 30, rue**
**de Léningrad, F-75008 Paris (FR)**

EP 0 165 113 B1

LIBER, STOCKHOLM 1988

## Description

La présente invention concerne d'une façon générale les dispositifs de bâchage de volumes ou de surfaces, et en particulier un dispositif de bâchage et de débâchage du volume de chargement d'un camion, remorque, fourgon et analogue.

On connaît déjà dans la technique un très grand nombre de systèmes à bâche mobile équipant notamment des véhicules routiers. On connaît en particulier par le brevet français n° 1 372 826 un dispositif pour le bâchage de camions dans lequel la bâche est supportée par une pluralité d'arches coulissant sur les bords de celui-ci. Ce dispositif est désavantageux en ce que la bâche, en position rangée, occupe une place considérable, et en ce qu'il est en outre lourd et complexe.

De plus, on connaît par le brevet français n° 2 288 015 un dispositif pour la mise en place d'une bâche au dessus d'un volume à l'aide d'un cable relié à un système à treuil et manivelle. Cependant, aucun moyen n'est prévu dans ce brevet pour débâcher le volume, opération qui doit être exécutée à la main, ce qui est long et malcommode.

On connaît enfin divers systèmes d'entraînement de bâches à glissières, arceaux, chaînes et pignons, etc., qui présentent tous une grande complexité dès qu'ils permettent aussi bien le bâchage que le débâchage, et qui sont, lourds à manoeuvrer (voir par exemple le brevet US-A-3 964 781).

La présente invention vise à pallier ces inconvénients et à proposer un dispositif de bâchage et de débâchage qui soit de fonctionnement simple et efficace grâce à une structure de débâchage nouvelle et perfectionnée.

Un autre objet de l'invention est de proposer un tel dispositif, dans lequel la bâche puisse être fixée en place de façon rapide et sûre une fois quelle a été amenée en place au dessus d'un volume à recouvrir.

Enfin un autre objet de l'invention est de proposer un tel dispositif, dans lequel la bâche puisse être amenée à occuper un volume tout à fait minime en position repliée, pour ainsi sensiblement ne pas affecter le volume utile qu'elle est destinée à recouvrir.

A cet effet, la présente invention concerne un dispositif de bâchage et de débâchage d'un volume, tel que le volume de chargement d'un véhicule, du type comprenant une bâche agencèe pour glisser en et hors de position sur ledit volume, des moyens à câble de traction agencés pour amener la bâche en position sur ledit volume, et des moyens à câbles de traction agencés pour amener la bâche en position sur le volume à partir d'un magasin de réception de la bâche en position débâchée, caractérisé en ce qu'il comprend en outre des moyens de débâchage comprenant au moins un tambour rotatif situé à l'entrée du magasin et agencé pour être en contact avec la face intérieure de la bâche, des moyens de coopération mâle-femelle respectivement prévus sur la périphérie du ou des tambours et sur la face inférieure de la bâche, permettant de tracter cette dernière vers le magasin lors de la mise en rotation du ou des tambours, et des moyens de guidage prévus au dessus du ou des tambours et sur la surface supérieure de la bâche, agencés pour assurer un alignement satisfaisant des organes de coopération mâle-femelle entre eux lors de ladite traction.

L'invention sera mieux comprise à la lecture de la description suivante d'une forme de réalisation préférée du dispositif selon l'invention, donnée à titre d'exemple et faite en référence aux dessins annexés, sur lesquels:

la figure 1 est une vue de côté partiellement arrachée et en coupe, schématique, d'un mode de réalisation du dispositif de l'invention,

la figure 2 est une vue d'extrémité partiellement en coupe du dispositif de la figure 1,

la figure 3 est une vue en perspective arrachée montrant plus en détail une partie du dispositif des figures 1 et 2,

la figure 4 est une vue de côté en coupe d'une autre partie du dispositif des figures 1 et 2,

figure 5 est une vue de côté en coupe à échelle agrandie d'un détail de la figure 4,

la figure 6 est une vue de côté en coupe, à échelle agrandie, d'une partie du détail de la figure 5,

la figure 7 est une vue en coupe selon la ligne VII-VII de la figure 6,

la figure 8 est une vue en perspective schématique de l'arrière d'une variante de réalisation d'une partie du dispositif de l'invention,

la figure 9 est une vue en perspective schématique d'une variante d'une autre partie du dispositif de l'invention, et

la figure 10 est une vue en coupe transversale d'une variante de réalisation des moyens représentés sur la figure 7.

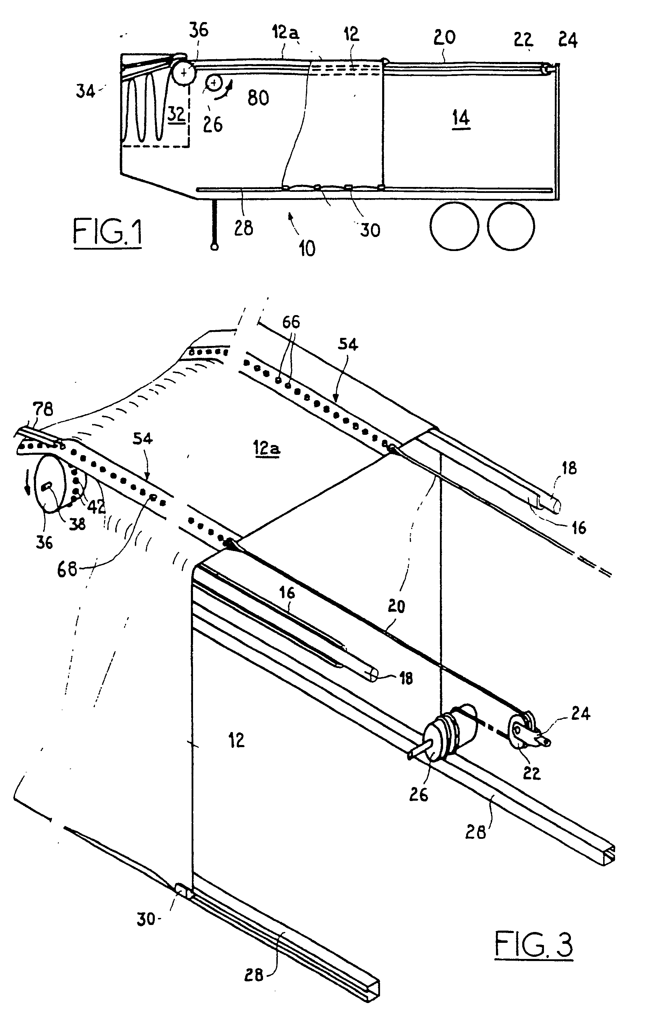

En référence aux dessins, et plus particulièrement aux figures 1 et 2, un dispositif de bâchage et de débâchage selon un premier mode de réalisation de la présente invention est installé sur une remorque de camion, globalement indiquée en 10, et comprend une bâche 12 agencée pour glisser longitudinalement en entourant par trois côtés le volume parallélépipédique 14 défini par ladite remorque, en étant supportée aux bords latéraux supérieurs de la remorque 10 sur des poutrelles de support dans le présent exemple en forme de gouttières ouvertes vers le haut qui reçoivent chacune sur toute leur longueur une chambre à air gonflable 18, comme on le verra plus en détail par la suite.

Des câbles de traction 20, au nombre de deux (non représentés sur la figure 2) sont fixés par une extrémité à l'arrière de la partie médiane horizontale 12a de la bâche 12 (à droite sur la figure 1), par tout moyen approprié tel que des oeillets. Les câbles 20 s'étendent sensiblement horizontalement vers la partie supérieure de l'arrière de la remorque, où sont prévues deux poulies de renvoi 22 à gorge montées pivotantes sur deux étriers respectifs 24 fixés au bâti de la remorque. Les câbles 20 sont renvoyés par ces poulies vers des tambours de traction respectifs 26 montés dans la région de l'avant de la remorque, et qui peuvent être entraînés en synchronisme par un moteur approprié (non représenté).

On pourra en outre prévoir des moyens pour freiner ces câbles pendant l'opération de débâchage, de manière à maintenir la bâche sous une certaine tension longitudinale, à des fins expliquées plus loin. Dans le cas où le moteur d'entraînement des câbles est électrique, ce freinage pourra être assuré en appliquant au moteur une tension de freinage appropriée. Les moyens de freinage pourront également prendre la forme tout dispositif mécanique, électromécanique, hydraulique, adapté à la structure particulière des moyens de débâchage à câbles de traction.

Dans la région inférieure de la remorque, de part et d'autre de celleci s'étendent longitudinalement des glissières 28 dans lesquelles sont montés coulissants une pluralité de galets, schématiquement indiqués en 30, fixés en des intervalles réguliers sur les bords inférieurs de la bâche 12. Comme on le verra plus loin, de tels moyens d'attache permettent un guidage longitudinal de la bâche lors de ses mouvements.

Par ailleurs, et encore à des fins de guidage longitudinal, la bâche 12 pourra comporter (voir figure 8), fixées à son extrémité postérieure, deux pièces rigides coudées 90 dont les coins intérieurs sont aptes à glisser contre les poutrelles longitudinales supérieures 16 de l'ossature de la remorque. L'angle du coude défini par les éléments 90 est tel qu'il épouse la forme de la remorque associée.

Ainsi ces éléments coudés, sans entraver les mouvements longitudinaux de la bâche 12 tant lors du bâchage que lors da débâchage, interdisent tout mouvement latéral de cette dernière.

Bien entendu, on pourra prévoir autant d'éléments coudés 90 que nécessaire dans le sens longitudinal de la bâche 12. Par ailleurs, les éléments 90 pourront être en tout matériau rigide approprié, métal ou autre, et en une ou plusieurs parties. En outre, dans le cas d'une telle configuration, les chambres à air 18 pourront être omises, tes poutrelles 16 prenant alors une forme plus conventionnelle.

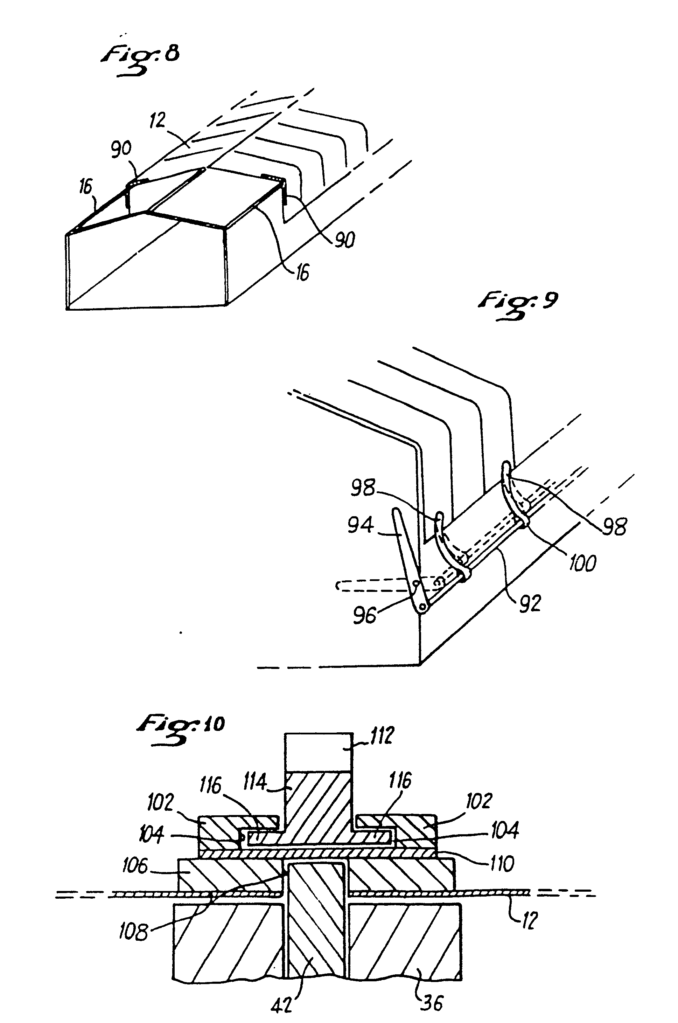

En référence à la figure 9, est décrite une variante des moyens d'attache des bords latéraux inférieurs de la bâche 12 sur l'ossature de la remorque. Selon cette variante, une barre rigide 92 s'étend longitudinalement de chaque côté du volume de chargement. Chaque barre 92 est fixée par ses deux extrémités à des leviers associés 94 qui sont montés pivotants autour d'axes horizontaux 96 orientés longitudinalement par rapport à la remorque. De plus, une pluralité de lanières de maintien 98 sont fixées aux extrémités latérales inférieures de la bâche 12, par couture ou analogue, et comportent à leur extrémité libre une boucle ou analogue 100 qui entoure la barre associée 92 et qui coulisse librement sur cette dernière, pour ne pas entraver les mouvements longitudinaux de la bâche 12.

Chaque levier 94 est apte à être tourné manuellement autour de son axe, dans le présent exemple d'un quart de tour, pour ainsi légèrement soulever les barres 92 situées de chaque côté de la remorque. Ainsi, par exemple dans des conditions de fort vent latéral, qui crée bien entendu dans la bâche une tension transversale qui peut aller jusqu'à empêcher tous les mouvements longitudinaux de bâchage et de débâchage, il suffit de manoeuvrer les leviers 94 pour soulager cette tension transversale et rendre ces opérations à nouveau possibles.

Bien entendu, les barres latérales 92 pourront être remplacées de façon appropriée par des tubes, ou encore par des câbles tendus entre les leviers 94. En outre, les moyens d'attache des bords latéraux de la bâche pourront prendre toute forme appropriée (oeillets, mousquetons, galets, etc). Dans le cas où l'on utilisera cette variante des moyens d'attache, on pourra omettre les chambres à air 18 mentionnée plus haut, la suppression de la tension dans la bâche étant assurée comme indiqué ci-dessus en manoeuvrant les leviers 94.

Dans la partie antérieure de la remorque 10 est prévu un espace ou magasin 32 destiné à recevoir la bâche 12 lors du débâchage, comme on le verra par la suite. La bâche y occupe une position repliée serrée, peu encombrante, éventuellement grâce à des moyens de support et de rangement décrits plus en détail par la suite. L'extrémité antérieure de la bâche 12 est fixée par tout moyen approprié à la paroi avant 34 du magasin 32, qui définit également dans le cas présent la paroi avant de la remorque 10.

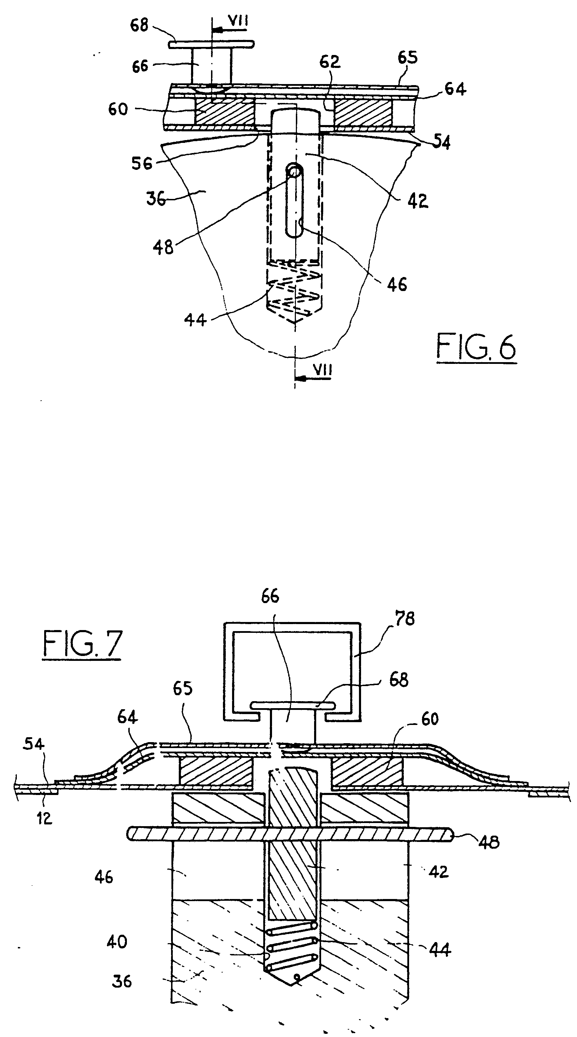

Plus particulièrement en référence aux figures 3 à 7, des moyens de débâchage, destinés à retirer la bâche de sa position de recouvrement du volume de la remorque, et à ranger celle-ci de façon appropriée dans le magasin 32, comprennent tout d'abord, montés rotatifs sur le bâti de la remorque dans la partie supérieure du magasin, deux tambours 36 espacés et montés rigidement sur un axe commun 38 s'étendant horizontalement transversalement à la remorque. Dans chacun des tambours, par exemple en bois, est ménagée une pluralité d'alésages 40 (voir figures 6 et 7) s'étendant radialement et ouverts en des emplacements régulièrement espacés à la périphérie extérieure du tambour 36. Dans chaque alésage 40 est reçu coulissant un élément à coprs cylindrique ou doigt associé 42, dont la longueur est sensiblement inférieure à la profondeur de l'alésage. Entre le fond de l'alésage 40 et la face inférieure du doigt 42 est reçu un ressort de compression hélicoïdal 44 agencé pour repousser le doigt vers l'extérieur en prenant appui dans un logement approprié (non visible) de l'extrémité radialement intérieure de celui-ci.

En outre, des moyens de limitation de la course du doigt dans son alésage comprennent, ménagées dans le tambour de part et d'autre de l'alésage, deux fentes ridiales 46, ainsi qu'une tige rectiligne 48 rigidement fixée au doigt 42 en le traversant sensiblement centralement, et qui s'étend de part et d'autre de celui-ci à travers les fentes 46, de manière à limiter les déplacements radiaux du doigt entre une position haute, qu'il occupe spontanément sous l'action du ressort 44 et dans laquelle le doigt fait saillie sur une certaine distance à la périphérie extérieure du tambour, et une position dans laquelle il est sensiblement rétracté dans son alésage 40.

A cet égard, de part et d'autre de chaque tambour à doigts 36 sont prévus des éléments fixes 50 définissant chacun en leur partie inférieure une surface de came 52 agencée pour coopérer avec les extrémités associées des tiges 48, qui à cet effet débordent légèrement latéralement par rapport au tambour.

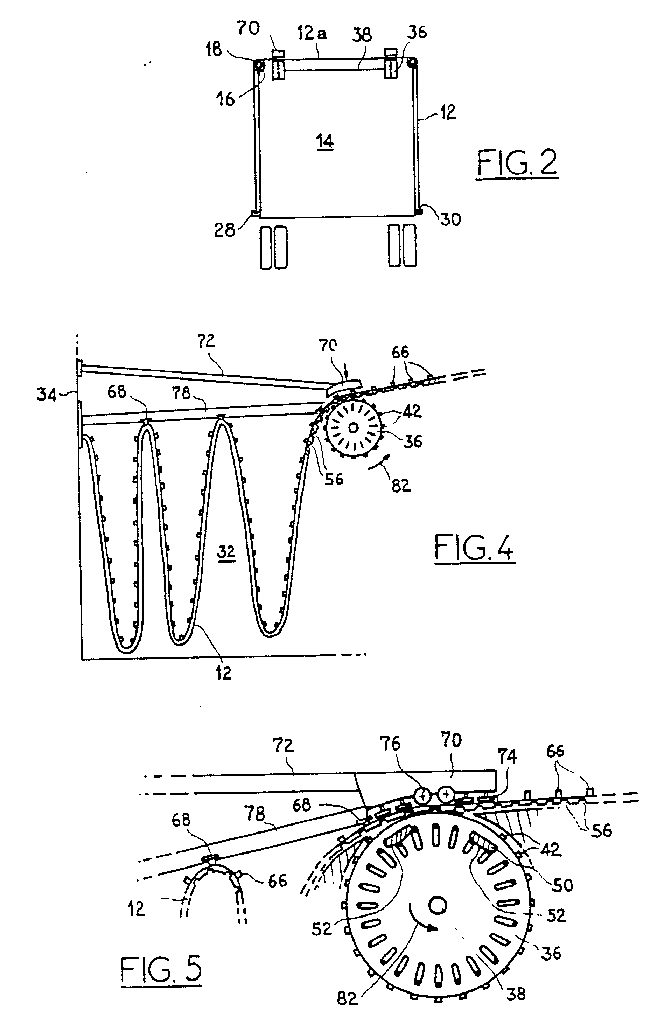

Deux surfaces de came 52 sont ainsi prévues de chaque côté de chaque tambour 36, à proximité de la région supérieure de celui-ci, de manière à ce que les doigts 42, légèrement avant et légèrement après être passés par leur apogée lors de la rotation du tambour, soient amenés à se rétracter dans leur alésage respectif 40. Notons cependant que les surfaces de came 52 sont disposées de manière à ce que les doigts 42 soient libres de faire saillie à la surface supérieure du tambour lors de leur passage par ladite apogée, comme le montre mieux la figure 5.

Les deux tambours à doigts 36 peuvent être sélectivement entraînés en synchronisme par un moteur approprié (non représenté) commandant leur arbre commun 38.

Les moyens de débâchage comprennent en outre, dans la bâche 12, une structure de traction comprenant deux bandes de traction 54 s'étendant longitudinalement en étant espacées l'une de l'autre de manière à coïncider avec la position des tambours 36 mentionnés ci-dessus. La bâche présente dans ces deux régions une structure multi-couches, comme le montre plus particulièrement la figure 7.

Plus précisément, chaque bande longitudinale 54 comporte à sa surface inférieure une série de trous circulaires 56 régulièrement espacés et séparés d'une distance sensiblement égale au pas des doigts 42 en saillie sur la périphérie de chacun des tambours. Dans la présente forme de réalisation, chaque trou 56 est renforcé par une plaquette 60, par exemple en matière plastique, dans laquelle est ménagée une ouverture 62 en alignement avec le trou 56 de la bande 54. Dans la présente forme de réalisation, les trous 56, 62 sont de section circulaire. Cependant, selon une variante non illustrée, les trous 56 pourront être renforcés à l'aide d'oeillets métalliques.

Selon une autre forme de réalisation (non illustrée), la partie radialement extérieure des doigts 42 et les trous 56, 62 pourront être de section polygonale, par exemple carrée ou rectangulaire, afin d'assurer entre ceux-ci une action "d'engrènement" plus efficace, comme on le verra plus loin.

Les plaquettes de renforcement 60 longitudinalement alignées le long de chaque bande de traction sont fixées à cette dernière par exemple par collage, et sur l'ensemble est fixée, également par collage, une bande 64 destinée à assurer l'étanchéité de la bâche et le maintien des plaquettes de renforcement 60.

A cet égard, notons ici que la bâche 12 ainsi que les bandes 54, 64 pourront par exemple être constituées d'une toile de bâche plastifiée de type conventionnel.

Au dessus de chaque bande de traction 54 est prévue une pluralité de pions de guidage 66 régulièrement espacés sur celle-ci et fermement fixés en traversant une bande supérieure 64, par tout moyen de fixation approprié. Comme le montrent en particulier les figures 3 et 4, certains parmi ces pions, également régulièrement espacés sur chaque bande, sont pourvus d'un chapeau 68 ou élargissement, par exemple en forme de disque, dans leur partie supérieure, à des fins expliquées par la suite. Dans une autre forme de réalisation (non illustrée), les pions qui sont munis d'un chapeau pourront être remplacés par exemple par de courtes sections d'un profilé de section en T appropriée. Notons ici que l'espacement entre les trous inférieurs 56 de chaque bande de traction et l'espacement entre les pions supérieurs ne sont pas nécessairement égaux, et on pourra par exemple prévoir un plon tous les deux trous.

Le dispositif décrit ici comporte en outre des moyens de guidage et d'appui des deux bandes de traction 54 de la bâche sur leur tambour à doigts associé. Ces moyens comprennent, pour chacun des deux ensembles bande-tambour, un bloc d'appui et de guidage 70 fixé à l'extrémité d'une poutrelle de support 72 montée pivotante par son extrémité opposée sur la paroi avant du magasin 32. Le bloc 70 est repoussé vers le bas pour appliquer la bande de traction associée de la bâche contre son tambour 36, par l'intermédiaire de moyens à ressort réglables (non représentés) agissant sur la poutrelle 72. Ces moyens d'appui pourront également, selon des variantes non représentées, être constitués d'un ou plusieurs vérins, d'une barre de torsion, de cables élastiques de type "sandow". Comme le montrent plus en détail les figures 6 et 7, chaque bloc comporte dans sa partie inférieure un passage de guidage à travers lequel peuvent glisser les pions 66 lors du mouvement de la bâche, ce passage étant délimité d'une part par des galets à axe vertical 74, dont l'épaisseur est assez faible pour que les pions qui sont équipés d'un chapeau 68 puissent passer librement, et d'autre part des galets à axe horizontal 76 agencés pour transmettre à la bande de traction 54 la poussée verticale vers le bas.

Enfin le dispositif comprend, dans le présent exemple, des moyens pour la réception appropriée de la bâche 12 dans le magasin 32. Ces moyens comprennent ici deux rails 78, un pour chaque tambour, dont l'extrémité avant est fixée rigidement à la paroi antérieure du magasin, et dont l'extrémité arrière s'étend ouverte en un emplacement correspondant à la sortie des pions 66 en aval du tambour 36, en étant articulée sur son bloc d'appui et de guidage respectif 70.

En référence à la figure 10 est décrite ci-dessous une variante des moyens de guidage des bandes de traction 54 de la bâche 12 au dessus des tambours à doigts rotatifs qui servent au débâchage. Selon cette variante, les tétons de guidage 66 de chaque bande de traction tels que décrits plus haut sont remplacés par deux profilés de guidage souples 102 de section transversale en forme de "L" inversé, qui définissent chacun une ouverture ou rainure 104 s'étendant horizontalement et tournée vers l'intérieur. La bande de traction en elle-même est alors constituée d'une première bande 106 qui est soudée à la bâche 12 et dans laquelle sont formés des trous 108 agencés pour recevoir les doigts saillants 42 du tambour de débâchage associé 36. Sur la surface supérieure de la bande 106 est fixée par soudage une seconde bande ou bande d'étanchéité 110, et les profilés de guidage 102 sont soudés symétriquement de part et d'autre de l'axe longitudinal de la bande de traction. On peut noter ici que les divers éléments formant chaque bande de traction pourront être fixés ensemble par tout autre moyen tel que collage, couture, etc.

Par ailleurs, et selon la souplesse inhérente des profilés 102, ceux-ci pourront s'étendre en continu sur toute la longueur de la bâche 12, ou bien être découpés en tronçons successifs de longueur appropriée. Il est en effet nécessaire que la fixation des profilés sur la bâche 12 n'affecte sensiblement pas la souplesse de cette dernière.

Les moyens de guidage comprennent en outre, sur un bloc d'appui 112 associé à chaque bande de traction, et dont la fonction est similaire à celle du bloc d'appui 70 décrit plus haut, à l'avant et à l'arrière de celui-ci, un élément de guidage rigide 114 de section transversale en forme de "T" inversé, la barre du "T" définissant deux pattes ou languettes en saillie latérale 116 qui sont aptes à venir s'engager dans les rainures 104 définies par les profilés 102. On obtient ainsi des moyens de guidage simplifiés par rapport à ceux des figures 6 et 7 avec de moindres risques de blocage, etc, tant lors du bâchage que lors du débâchage. Notons que, dans cette variante, les rails 78 sont omis et la bâche est accumulée en vrac dans le magasin 32.

Le fonctionnement du dispositif de bâchage et de débâchage conforme aux figures 1 à 7 est le suivant. Tout d'abord, lorsque l'on souhaite mettre la bâche 12 en place au dessus du volume de chargement de la remorque 10, les tambours de traction 26 des câbles de bâchage 20 sont mis en rotation dans le sens de la flèche 80 de la figure 1 pour ainsi tirer la bâche 12 vers la droite sur la figure 1, ses coins latéraux supérieurs glissant sur les gouttières 16 munies des chambres à air 18 et les galets 30 coulissant dans leur glissière respective 28. Au cours de cette opération, la bâche aura été préalablement mise en place sur les tambours de traction 36 et ces derniers rendus libres en rotation. Notons ici que le fait que les doigts 42 et les trous 56 de la bâche soient en alignement ou non n'a aucune importance pour le bon déroulement du bâchage, les doigts 42 se rétractant si cet alignement n'est pas réalisé.

Une fois que la bâche a été mise en place, son extrémité postérieure sur laquelle sont attachés les câbles 20 ayant atteint l'arrière de la remorque, les chambres à air 18 reçues dans les gouttières 16 sont gonflées de façon appropriée, par un dispositif pneumatique non représenté, ce qui a pour conséquence la mise sous tension de la bâche à la fois dans sa partie médiane supérieure et sur ses bords latéraux. On comprend que cette mise sous tension a pour effet de modifier l'orientation des galets 30 dans leur glissière 28, pour ainsi les bloquer en place par contact à frottement avec celle-ci. La bâche 12 est ainsi solidement immobilisée en place, sous tension, par une simple opération de gonflage sous une pression appropriée des chambres à air 18. Dans la variante de réalisation de la figure 9, cette opération est effectuée à l'aide des leviers 94.

Lorsque l'on souhaite débâcher la remorque 10, les chambres à air 18, lorsqu'elles sont prévues, sont tout d'abord vidées de leur air comprimé de façon appropriée, pour ainsi rendre la bâche de nouveau lâche au dessus du volume de chargement. Dans la variante de la figure 9, cette action est remplacée ou complétée par la manoeuvre des leviers 94, comme décrit plus haut. Puis un moteur approprié (non représenté) est mis en route pour entraîner les tambours à doigts 36 en rotation dans le sens de la flèche 82 (figures 1, 4) et les doigts 42 situés à la périphérie des tambours coopèrent à la surface supérieure de ceux-ci avec les trous correspondants 56 (ou 108 dans la variante de la figure 10) ménagés dans les deux bandes de traction associées 54 (ou 106) de la bâche, comme on l'a vu plus haut. La bâche 12 est ainsi progressivement tirée vers la gauche sur la figure 1 et, au cours de ce mouvement, les pions 66 (dans le premier mode de réalisation) viennent tour à tour partiellement pénétrer à l'intérieur de leur rail associé 78, par le dessous de celui-ci, et l'on comprend que tous les pions 66 qui sont équipés d'un chapeau 68, du fait de la coopération de ce chapeau avec les bords inférieurs du rail, comme le montre en particulier la figure 3, resteront emprisonnés en coulissement dans ce rail, pour ainsi tenir lieu de points d'accrochage régulièrement espacés de la bâche dans son magasin 32. Ainsi, et comme le montre la figure 4, la bâche occupera dans le magasin une position dite "en accordéon", peu en combrante, et permettant une nouvelle opération de bâchage en n'offrant qu'une très faible résistance à son déploiement.

A cet égard, on pourra en outre prévoir dans la région de la sortie du tambour des moyens à soufflage d'air (non représentés) destinés à plaquer le pli de la bâche adjacente, en train de se former pendant la rotation des tambours, contre le pli précédent, ce qui permet à la bâche d'occuper en position repliée un espace tout à fait minime.

Selon la variante de la figure 10 on emmagasinera la bâche en vrac dans le magasin, et on prévoira le cas échéant des lanières destinées à enserrer les parties latérales de celle-ci et à les maintenir en place pendant le déplacement de la remorque, dans le but d'éviter que celles-ci ne battent au vent lors d'un tel déplacement.

A titre d'exemple, on pourra prévoir des tambours d'un rayon d'environ 30 cm comportant à la périphérie vingt quatre doigts, qui seront ainsi espacés de quelques quatre centimètres. Bien entendu, le pas des trous 56 ménagés dans la bâche sera également de l'ordre de quatre centimètres. L'expérience a cependant montré qu'une distance légèrement inférieure à ces quatre centimètres s'avérait préférable.

Par ailleurs, il est également tout à fait souhaitable que les dimensions des trous 56 ou 108 de la bâche soient nettement supérieures à celles des extrémités associées des doigts 42. En effet, il est nécessaire d'une part d'autoriser les inévitables variations dimensionnelles de la bâche, des trous) des doigts, etc. dues par exemple à l'usure, aux écarts climatiques, etc. sans compromettre l'efficacité du système; et d'autre part, d'assurer le libre déplacement des doigts 42 lorsqu'ils ne sont plus soumis à l'action de la came "mont" 52 et qu'ils viennent s'engager dans leur trou associé pour effectuer la traction, ainsi que d'éviter le coincement du doigt dans son trou associé au moment où il doit être rétracté par la came "aval" pour libérer la bâche dans le magasin. Notons qu'à cet instant précis, le doigt suivant s'engagera dans le trou suivant pour assurer de façon appropriée la continuité de la traction.

En outre, si les pions à chapeau 68 du premier mode de réalisation sont espacés d'environ 1,2 m, alors une hauteur de magasin de 60 cm sera suffisante pour recevoir la bâche lors du débâchage. On pourra ainsi, dans le cas où le présent dispositif est monté sur un camion à volume de chargement intégré, disposer le dispositif de débâchage et son magasin associé au dessus de la cabine du conducteur, de façon avantageusement peu encombrante.

Bien entendu, la présente invention n'est pas limitée à la forme de réalisation décrite, et inclut toute variante ou modification que pourra y apporter l'homme de l'art. On pourra prévoir en particulier autant de moyens de débâchage à tambour et bande de traction associée que nécessaire, en fonction notamment du poids de la bâche, de la largeur du volume à recouvrir, etc.

Dans un même esprit, le nombre de doigts et/ou de rangées de doigts sur chaque tambour pourra être quelconque et choisi en fonction de chaque cas particulier.

De plus, on pourra prévoir la possibilité d'articuler sur la paroi avant du volume de chargement, ou encore de monter sur rails l'ensemble du dispositif et du magasin, afin de pouvoir avantageusement dégager celui-ci du volume de chargement. En outre, les dispositifs de bâchage et de débâchage étant deux entités tout à fait indépendantes, le tambour de bâchage 26 pourra être situé en tout endroit approprié du véhicule, par exemple dans la partie arrière inférieure de celui-ci. Bien entendu, le cheminement des câbles 20 sera alors modifié en conséquence. De plus, selon une variante (non illustrée), les chambres à air de mise sous tension de la bâche pourront être situées dans une doublure de la bâche, en des emplacements de celle-ci correspondant à leur position initiale dans les gouttières 16.

## Revendications

1. Dispositif de bâchage et de débâchage d'un volume, tel que le volume de chargement d'un véhicule de transport, ou d'une surface, du type comprenant une bâche (12) agencée pour glisser en et hors de position sur ledit volume, et des moyens à câbles de traction (20) agencés pour amener la bâche en position sur le volume à partir d'un magasin (32) de réception de la bâche en position débâchée, caractérisé en ce qu'il comprend en outre des moyens de débâchage comprenant au moins un tambour rotatif (36) situé à l'entrée du magasin et agencé pour être en contact avec la face inférieure de la bâche, des moyens de coopération mâle-femelle (42, 56) respectivement prévus sur la périphérie du ou des tambours et sur la face inférieure de la bâche, permettant de tracter cette dernière vers le magasin (32) lors de la mise en rotation du ou des tambours (36) et des moyens de guidage (70, 74, 66) prévus au-dessus du ou des tambours et sur la face supérieure de la bâche (12), agencés pour assurer un alignement satisfaisant des organes de coopération mâle-femelle entre eux lors de ladite traction.

2. Dispositif selon la revendication 1 caractérisé en ce que les organes de coopération mâle-femelle comprennent respectivement, sur chacun des tambours, une pluralité de doigts périphériques (42) pouvant être amenés sélectivement en saillie à la périphérie du tambour, et, à la surface inférieure de la bâche (12), une pluralité de trous (56) longitudinalement espacés, chaque doigt étant soumis à une force de poussée vers l'extérieur par un ressort de compression (44), et étant solidaire d'un organe (48) en saillie sur les flancs du tambour (36), à travers des ouvertures (48) ménagées dans celui-ci pour être soumis à l'action de surfaces de came (52) et être rétracté dans le tambour dans deux régions situées de part et d'autre de la région contact du tambour et de la bâche.

3. Dispositif selon la revendication 2, caractérisé en ce que les trous (56) sont ménagés dans une partie de la bâche (54) constituée de deux bandes en superposition (54, 64) emprisonnant des plaquettes de renforcement souples (60) présentant chacune une ouverture (62) alignée avec ledit trou.

4. Dispositif selon l'une quelconque des revendications 1 à 3, caractérisé en ce que les moyens de guidage comprennent, associé à chaque tambour (36), un organe d'appui (70) comportant une pluralité de galets (74, 76) et agencé pour appuyer la bâche contre le tambour et, sur la surface supérieure de la bâche (12) dans la région desdits trous (56), une pluralité de pions saillants (66) agencés pour être guidés entre lesdits galets (74, 76).

5. Dispositif selon la revendication 4, caractérisé en ce que certains des pions (66), régulièrement espacés longitudinalement, comportent en leur partie supérieure un élargissement (68), et en ce que dans le magasin (32) est prévu au moins un rail (78) associé à chaque tambour (36) et dont une extrémité libre est adjacente audit tambour, chaque rail (78) présentant la forme d'un organe creux pourvu dans sa partie inférieure d'une fente longitudinale de largeur comprise entre celle du pion (66) et celle de l'élargissement (68).

6. Disposition selon l'une quelconque des revendications 1 à 5, caractérisé en ce qu'il comprend en outre dans la région de l'entrée du magasin (32) des moyens pour souffler de l'air vers le fond du magasin.

7. Dispositif selon l'une quelconque des revendications 1 à 3 caractérisé en ce que les moyens de guidage comprennent, associé à chaque tambour un organe d'appui (112) agencé pour appuyer la bâche contre le tambour et comportant, dirigé vers le bas, au moins un premier organe de guidage (114) qui présente dans sa région inférieure deux languettes (116) en saillie latéralement vers l'extérieur et, sur la surface supérieure de la bâche, dans la région desdits trous, des seconds organes de guidage (102) complémentaires aux premiers et définissant deux rainures (104) ouvertes vers l'intérieur et agencées pour recevoir lesdites languettes du ou des premiers organes de guidage, la bâche étant par ailleurs accumulée en vrac dans le magasin au cours de l'opération de débâchage.

8. Dispositif selon l'une quelconque des revendications 1 à 7, caractérisé en ce qu'il comprend en outre des moyens pour assurer le maintien en place de la bâche (12) au-dessus du volume en position bâchée, constitués de galets (30) solidaires des bords latéraux de la bâche (12), coulissant dans deux glissières latérales (28) associées, et d'au moins une chambre à air (18) supportée rigidement par rapport aux glissières et agencée pour mettre la bâche sous tension lorsqu'elle est gonflée.

9. Dispositif selon l'une quelconque des revendications 1 à 7 caractérisé en ce qu'il comprend en outre un organe de maintien et de guidage mobile (92) allongé s'étendant longitudinalement de part et d'autre du volume de chargement et, sensiblement sur toute la longueur de ce dernier, une pluralité de moyens d'attache coulissants (98) reliant les extrémités latérales inférieures de la bâche (12) audit organe de maintien et de guidage, ainsi que dis moyens de manoeuvre (94) pour faire varier la position de chacun des organes de maintien et de guidage, de telle sorte qu'une tension transversale existant dans la bâche entre ses extrémités latérales inférieures puisse être au moins atténuée pour faciliter les opérations de bâchage et de débâchage.

10. Dispositif selon la revendication 9, caractérisé en ce que les organes de maintien et de guidage consistent en des barres rigides (92) et en ce que les moyens de manoeuvre comprennent des leviers pivotants (94), les extrémités des barres rigides étant fixées aux extrémités desdits leviers.

11. Dispositif selon l'une quelconque des revendications 1 à 10 caractérisé en ce qu'il comprend en outre des moyens de freinage des moyens à câbles de traction, agencés pour être mis en service pendant l'opération de débâchage par les moyens de débâchage, de telle sorte qu'une tension longidutinale soit impartie à ladite bâche pendant ladite opération de débâchage pour conserver l'alignement de celle-ci avec le ou les tambours rotatifs.

12. Dispositif selon l'une des revendications 1 à 7 caractérisé en ce qu'il comprend en outre, fixés dans une région d'extrémité libre ou postérieure de la bâche (12), des moyens à pièces rigides coudées (90) présentant un coin tourné vers l'intérieur du volume de chargement, et des organes de support longitudinaux (16) rigides montés dans les régions latérales supérieures dudit volume, les coins desdits moyens à pièces rigides et les organes de support longitudinaux étant agencés pour coopérer ensemble en glissement de manière à éviter tout déplacement latéral de la bâche au cours de l'opération de débâchage, pour ainsi conserver l'alignement de celle-ci avec le ou les tambours rotatifs.

**Patentansprüche**

1. Einrichtung zum Anbringen und zum Entfernen einer Plane an bzw. von einem Volumen wie zum Beispiel der Ladung eines Transportfahrzeugs oder einer Oberfläche, mit einer in eine Stellung auf dem Volumen und aus derselben gleitbar zu bewegenden Plane (12) und mit Zugseile (20) aufweisenden einrichtungen zum Anbringen der Plane an das Volumen aus einem Magazin (32), das die Plane in der entfernten Stellung aufnimmt, gekennzeichnet durch Planentfernungseinrichtungen mit einer am Magazineinlaß angeordneten Drehtrommel (36), die durch die untere Fläche der Plane betätigt wird, durch förmschlüssig ineinandergreifende Mittel (42 und 56), die am Umfang der Trommel bzw. der Trommeln bzw. an der unteren Fläche der Plane angeordnet sind, so daß letztere in Richtung auf das Magazin (32) dann gezogen werden kann, wenn die Trommel bzw. die Trommeln (36) in Drehung versetzt werden, und durch an der Trommel bzw. den Trommeln und an der oberen Fläche der Plane (12) vorgesehene Führungseinrichtungen (70, 74 und 66) für eine ausreichende Ausrichtung der inaneindergreifenden Mittel beim Ziehen an der Plane.

2. Einrichtung nach Anspruch 1, dadurch gekennzeichnet, daß die ineinandergreifenden Mittel mehrere an jeder Trommel, in eine vom Trommelumfang vorspringende Stellung wahlweise bringbare Umfangsfinger (42) und an der unteren Seite der Plane (12) mehrere in der Längsrichtung angeordneten Löcher (56) enthalten, wobei jeder Finger durch eine Druckfeder (44) nach außen gedrückt wird und mit einem von der Stirnseite der Trommel (36) vorstehenden Glied (48) fest verbunden ist, wobei die Verschiebung der Finger durch in der Trommel vorgesehene Öffnungen (48) erfolgt, so daß die Finger von Steuerkurven (52) betätigt und in die Trommel hinein an beiden Seiten der Berührungszone zwischen der Trommel und der Plane zurückgezogen werden können.

3. Einrichtung nach Anspruch 2, dadurch gekennzeichnet, daß die Löcher (56) in einem Teil der Plane (54) vorgesehen sind, die durch zwei übereinanderliegende Streifen (54 und 64) derart gebildet sind, daß biegsame Verstärkungsplatten (60) umgriffen werden, die jeweils eine mit dem genannten Loch (62) ausgerichtete Öffnung aufweist.

4. Einrichtung nach einem der Ansprüche 1 bis 3, dadurch gekennzeichnet, daß in Zusammenhang mit jeder Trommel (36) die Führungseinrichtungen ein Abstützglied (70) aufweisen, das mehrere Walzen (74 und 76) aufweist und so betätigt wird, daß die Plane gegen die Trommel gedrückt wird, und mehrere an der oberen Fläche der Plane (12) im Bereich der Löcher (56) angeordnete vorstehende Nasen (66) umfaßt, die zwischen den Walzen (74 und 76) geführt werden.

5. Einrichtung nach Anspruch 4, dadurch gekennzeichnet, daß einige der Nase (66), die in der Längsrichtung einen regelmäßigen Abstand zueinander aufweisen, in ihrem Oberteil eine Verbreiterung (68) aufweisen und daß mindestens eine der jeweiligen Trommel (38) zugeordnete Schiene (78) im Magazin vorhanden ist, deren freies Ende neben der Trommel angeordnet ist, wobei jede Schiene (78) die Gestalt eines hohlen Glieds aufweist, das in seinem unteren Abschnitt mit einer Längsspalte versehen ist, deren Breite zwischen der Breite der Nase (66) und der Breite der Verbreiterung (60) liegt.

6. Einrichtung nach einem der Ansprüche 1 bis 5, dadurch gekennzeichnet, daß sie weiterhin im Bereich des Einlasses (32) des Magazins Einrichtungen umfaßt, um einen Luftstrahl in Richtung auf den Magzinboden zu richten.

7. Einrichtung nach einem der Ansprüche 1 bis 3, dadurch gekennzeichnet, daß die Führungseinrichtungen ein der jeweiligen Trommel zugeordnetes Stützglied (112) umfassen, das so angeordnet ist, daß es die Plane gegen die Trommel hält und das mindestens ein nach unten gerichtetes erstes Führungsglied (114), das in seinem unteren Bereich zwei seitlich angeordnete und nach außen vorstehende Zungen (116) und auf der oberen Fläche der Plane und im Bereich der Löcher angeordnete zweite Führungsglieder (102) umfaßt, die den ersten Führungsgliedern entsprechen und die zwei nach innen sich öffnende, die Zungen des bzw. der ersten Führungsgliedes bzw. -glieder in sich aufnehmende Nuten (104) aufweisen, wobei die Plane im übrigen bei ihrer Entfernung vom Volumen lose abgelegt wird.

8. Einrichtung nach einem der Ansprüche 1 bis 7, gekennzeichnet weiterhin durch Mittel, die die Plane (12) in ihrer Stellung oberhalb des Volumens nach deren Anbringung halten und die an den Seitenrändern der Plane (12) befestigte, in zwei seitlichen Kulissen (28) verschiebbare Rollen (30) und durch mindestens eine Luftkammer (18) umfassen, die relativ zu den Kulissen fest angeordnet ist und die Plane unter Zugspannung setzt, nachdem diese aufgeblasen worden ist.

9. Einrichtung nach einem der Ansprüche 1 bis 7, weiterhin gekennzeichnet durch ein bewegliches, längliches Abstützungsund Führungsglied (92), das sich beidseits des Ladevolumens erstreckt und durch im wesentlichen auf der ganzen Länge des Volumens sich erstreckende, gleitende Befestigungsmittel (98), die die seitlichen unteren Enden der Plane (12) mit dem genannten Abstützungs- und Führungsglied verbinden, und durch Handhabungsmittel (94), die die Stellung jedes der Abstützungs- und Führungsglieder einstellt, so daß eine in der Plane zwischen ihren unteren Seitenrändern bestehende quergerichtete Zugspannung mindestens gemindert werden kann, um die Anbringung und Entfernung der Plane zu erleichtern.

10. Einrichtung nach Anspruch 9, dadurch gekennzeichnet, daß die Abstützungs und Führungsglieder starre Stangen (92) umfassen und daß die Handhabungsmittel schwenkbare Hebel (94) umfassen, wobei die Enden der starren Stangen an den Enden der Hebel befestigt sind.

11. Einrichtung nach einem der Ansprüche 1 bis 10, weiterhin gekennzeichnet durch Mittel zum Abbremsen der Zugseile, die so angeordnet sind, daß sie während der Entfernung der Plane durch die Planenentfernungseinrichtungen in Betrieb gesetzt werden, so daß während des Entfernens der Plane dieser eine Längszugspannung erteilt wird, um deren Ausrichtung relativ zu der bzw. den Drehtrommel(n) aufrechzuhalten.

12. Einrichtung nach einem der Ansprüche 1 bis 7, weiterhin gekennzeichnet durch im Bereich des freien oder hinteren Endes der Plane (12) angeordnete Mittel mit starren Winkelstücken (90), die einen in Richtung auf das Innere des Ladevolumens gerichteten Eckteile haben, und durch starre Längsstützglieder (16), die in den seitlichen oberen Bereichen des Volumens angeordnet sind, wobei die Eckteil der Mittel mit starren Stücken und die Längsstützglieder so angeordnet sind, daß sie zusammen so gleiten, daß sie jegliche seitliche Verschiebung der Plane bei deren Entfernung unterbinden, um deren Ausrichtung relativ zu der Drehtrommel bzw. den Drehtrommeln aufrechzuerhalten.

**Claims**

1. Device for covering and uncovering a volume, such as the volume used for the load in a commercial vehicle, or a surface, of the kind comprising a covering made of coarse canvas (12) fitted to slide in and out of position over said volume, and means with traction cables (20) fitted to bring the covering in position over the volume from a store (32) which receives the covering when it uncovers the volume, characterized by the fact that it furthermore comprises uncovering means comprising at least one rotating drum (36) located at the entrance of the store and fitted to be in contact with the lower side of the covering, male-female cooperating means (42, 56) respectively provided for on the periphery of the drum or drums and on the lower side of the covering, for drawing the latter towards the store (32) when the drum or drums (36) is or are rotated, and guiding means (70, 74, 66) provided for above the drum or drums and on the upper side of the covering (12) and fitted to ensure a satisfactory mutual alignment of the male-female cooperating members during said drawing.

2. Device according to claim 1, characterized by the fact that the male-female cooperating means comprise respectively, on each of the drums, a plurality of peripheral pins (42) which may be brought selectively to protrude at the periphery of the drum, and, on the lower side of the covering (12), a plurality of longitudinally spaced holes (56), each pin being subjected to a pressure exerted outwards by a compression spring (44), and being solid with a member (48) protruding on the sides of the drum (36), through openings (48) provided for in the latter in order to be subjected to the action of cam surfaces (52) and to be retracted into the drum, in two areas located on both sides of the contacting area of the drum and of the covering.

3. Device according to claim 2, characterized by the fact that the holes (56) are provided for in a part of the covering (54) constituted by two superposed strips (54, 64) which enclose flexible strengthening platelets (60) provided each with an opening (62) aligned with said hole.

4. Device according to any of claims 1 to 3, characterized by the fact that the guiding means comprise, associated with each drum (36), a supporting member (70) comprising a plurality of rollers (74, 76) and fitted to press the covering on the drum and, on the upper side of the covering (12) in the area of said holes (56), a plurality of protruding studs (66) fitted to be guided between said rollers (74, 76).

5. Device according to claim 4, characterized by the fact that some of the studs (66), regularly spaced apart from each other longitudinally, comprise a lateral extension (68) at their upper part, and by the fact that in the store (32) is provided for at least one rail (78) associated with each drum (36) and a free end of which is adjacent to said drum, each rail (78) presenting the shape of a hollow member provided in its lower part with a longitudinal split the width of which is comprised between the widths of the stud (66) and of the lateral extension (68).

6. Device according to any of claims 1 to 5, characterized by the fact that it furthermore comprises in the entrance area of the store (32) means for blowing air towards the end of the store.

7. Device according to any of claims 1 to 3, characterized by the fact that the guiding means comprise, in association with each drum, a supporting member (112) which is fitted to press the covering on the drum and which comprises, downwardly extending, at least one first guiding member (114) which comprises in its lower area two tongues (116) laterally protruding outwardly, and, on the upper side of the covering, in the area of said holes, second guiding members (102) complementary to the first ones and defining two grooves (104) which are open inwardly and fitted to receive said tongues of the first guiding member or members, the covering being incidentally amassed in bulk into the store durung the uncovering process.

8. Device according to any of claims 1 to 7, characterized by the fact that it furthermore comprises means for securing the covering (12) over the volume in its covered condition, which are constituted by rollers (30) rigid with the lateral edges of the covering (12) and sliding in two lateral associated slides (28), and by at least one air chamber (18) rigidly supported with respect to the slides and fitted to tension the covering when it is inflated.

9. Device according to any of claims 1 to 7, characterized by the fact that it furthermore comprises a movable and elongated supporting and guiding member extending longitudinally on both sides of the volume used for the load, and, substantially along the whole length of the latter, a plurality of sliding fastening means (98)

9

connecting the lower lateral ends of the covering (12) to said supporting and guiding member, as also handling means (94) for modifying the position of each of the supporting and guiding means, so that a transversal tension existing in the covering between its lower lateral ends may be at least reduced in order to facilitate the covering and uncovering process.

10. Device according to claim 9, characterized by the fact that the supporting and guiding members consist of rigid bars (92), and by the fact that the handling means comprise pivoting levers (94), the ends of the rigid bars being fixed to the ends of said levers.

11. Device according to any of claims 1 to 10, characterized by the fact that it furthermore comprises mearts for braking the means with traction cables, which are fitted to be run during the process of uncovering by the uncovering means, so that a longitudinal tension is applied to said covering during said uncovering process for maintaining the alignment of the latter and of the rotating drum or drums.

12. Device according to any of claims 1 to 7, characterized by the fact that it furthermore comprises, fixed in a free or back end area of the covering (12), means with rigid bent pieces (90) provided with a corner turned towards the inside of the volume used for the load, and longitudinal rigid supporting members (16) fixed in the upper lateral areas of said volume, the corners of said means with rigid pieces and the longitudinal supporting members being fitted to slidingly cooperate together so that any lateral displacement of the covering is avoided during the uncovering process, and so that the alignment of the latter and of the rotating drum or drums is thus maintained.

FIG.1

FIG.3

1

FIG. 2

FIG. 4

FIG. 5

3

FIG.6

FIG.7

Fig. 8

Fig. 9

Fig. 10